# EUROPÄISCHE PATENTSCHRIFT

(11) **EP 0 912 690 B1**
(45) Veröffentlichungstag und Bekanntmachung des Hinweises auf die Patenterteilung: **05.12.2001**
(21) Anmeldenummer: 97923865.6
(22) Anmeldetag: 09.05.1997
(51) Int. Cl.: C11D 3/39

(54) **KATALYTISCH WIRKSAME AKTIVATORKOMPLEXE MIT N 4?-LIGANDEN FÜR PERSAUERSTOFFVERBINDUNGEN**
CATALYTICALLY EFFECTIVE ACTIVATOR COMPLEXES WITH N 4? LIGANDS FOR PEROXIDE COMPOUNDS
COMPLEXES ACTIVATEURS A ACTION CATALYTIQUE CONTENANT DES LIGANDS DE N 4? POUR DES COMPOSES PEROXYDES

(30) Priorität: 20.05.1996 DE 19620267
(43) Veröffentlichungstag der Anmeldung: 06.05.1999
(73) Patentinhaber: Henkel Kommanditgesellschaft auf Aktien, 40589 Düsseldorf-Holthausen (DE)
(72) Erfinder: BLUM, Helmut, D-40595 Düsseldorf (DE); MAYER, Bernd, D-40597 Düsseldorf (DE); PEGELOW, Ulrich, D-40597 Düsseldorf (DE)
(86) Internationale Anmeldenummer: EP9702396
(87) Internationale Veröffentlichungsnummer: WO9744430

(56) Entgegenhaltungen:
- EP-A- 0 384 503
- EP-A- 0 693 550
- DE-A- 19 529 904
- DE-A- 19 529 905

## Beschreibung

Die vorliegende Erfindung betrifft die Verwendung von bestimmten Übergangsmetall-Diiminkomplexen als katalytisch wirksame Aktivatoren für Persauerstoffverbindungen, insbesondere zum Bleichen von Farbanschmutzungen beim Waschen von Textilien oder beim Reinigen harter Oberflächen, sowie Wasch-, Reinigungs- und Desinfektionsmittel, die derartige Aktivatoren beziehungsweise Katalysatoren enthalten.

Anorganische Persauerstoffverbindungen, insbesondere Wasserstoffperoxid und feste Persauerstoffverbindungen, die sich in Wasser unter Freisetzung von Wasserstoffperoxid lösen, wie Natriumperborat und Natriumcarbonat-Perhydrat, werden seit langem als Oxidationsmittel zu Desinfektions- und Bleichzwecken verwendet. Die Oxidationswirkung dieser Substanzen hängt in verdünnten Lösungen stark von der Temperatur ab; so erzielt man beispielsweise mit H₂O₂ oder Perborat in alkalischen Bleichflotten erst bei Temperaturen oberhalb von etwa 80 °C eine ausreichend schnelle Bleiche verschmutzter Textilien. Bei niedrigeren Temperaturen kann die Oxidationswirkung der anorganischen Persauerstoffverbindungen durch Zusatz sogenannter Bleichaktivatoren verbessert werden, für die zahlreiche Vorschläge, vor allem aus den Stoffklassen der N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Hydrotriazine, Urazole, Diketopiperazine, Sulfurylamide und Cyanurate, außerdem Carbonsäureanhydride, insbesondere Phthalsäureanhydrid, Carbonsäureester, insbesondere Natrium-nonanoyloxybenzolsulfonat, Natrium-isononanoyl-oxybenzolsulfonat und acylierte Zuckerderivate, wie Pentaacetylglukose, in der Literatur bekannt geworden sind. Durch Zusatz dieser Substanzen kann die Bleichwirkung wäßriger Peroxidflotten so weit gesteigert werden, daß bereits bei Temperaturen um 60 °C im wesentlichen die gleichen Wirkungen wie mit der Peroxidflotte allein bei 95 °C eintreten.

Im Bemühen um energiesparende Wasch- und Bleichverfahren gewinnen in den letzten Jahren Anwendungstemperaturen deutlich unterhalb 60 °C, insbesondere unterhalb 45 °C bis herunter zur Kaltwassertemperatur an Bedeutung.

Bei diesen niedrigen Temperaturen läßt die Wirkung der bisher bekannten Aktivatorverbindungen in der Regel erkennbar nach. Es hat deshalb nicht an Bestrebungen gefehlt, für diesen Temperaturbereich wirksamere Aktivatoren zu entwickeln, ohne daß bis heute ein überzeugender Erfolg zu verzeichnen gewesen wäre. Ein Ansatzpunkt dazu ergibt sich durch den Einsatz von Übergangsmetallsalzen und -komplexen, wie zum Beispiel in den europäischen Patentanmeldungen EP 0 392 592, EP 0 443 651, EP 0 458 397, EP 0 544 490 oder EP 0 549 271 vorgeschlagen, als sogenannte Bleichkatalysatoren. Bei diesen besteht, vermutlich wegen der hohen Reaktivität der aus ihnen und der Persauerstoffverbindung entstehenden oxidierenden Intermediate, die Gefahr der Farbveränderung gefärbter Textilien und im Extremfall der oxidativen Textilschädigung. Aus der europäischen Patentanmeldung EP 0 630 964 sind bestimmte Mangankomplexe, insbesondere vom Salen-Typ bekannt, welche keinen ausgeprägten Effekt hinsichtlich einer Bleichverstärkung von Persauerstoffverbindungen haben und gefärbte Textilfasern nicht entfärben, aber die Bleiche von in Waschlaugen befindlichem, vom Textil abgelösten Schmutz oder Farbstoff bewirken können. Die europäische Patentanmeldung EP 0 693 550 betrifft Bleichmittel, die Persauerstoffverbindung und Mangankomplexe mit bestimmten Liganden enthalten. Zu den dort aufgeführten Liganden gehören cyclische Verbindungen, die über 4 Stickstoffatome mit dem Mangan-Zentralatom komplexieren.

Die vorliegende Erfindung hat die Verbesserung der Oxidations- und Bleichwirkung anorganischer Perverbindung bei niedrigen Temperaturen unterhalb von 80 °C, insbesondere im Temperaturbereich von ca. 15 °C bis 45 °C, zum Ziel.

Es wurde nun gefunden, daß Übergangsmetallkomplexe, deren Liganden den aus o-Aminobenzaldehyd beziehungsweise entsprechenden Ketonen und/oder substituierten Derivaten davon und Bisaminen zugänglichen Bis-Schiffschen Basen entsprechen, eine deutliche bleichkatalysierende Wirkung haben. Dies trifft um so mehr zu, wenn der sich formal vom o-Aminobenzaldehyd ableitende aromatische Ring elektronenverschiebende Substituenten trägt.

Gegenstand der Erfindung ist demgemäß die Verwendung von Übergangsmetall-Komplexen der Formel (I), 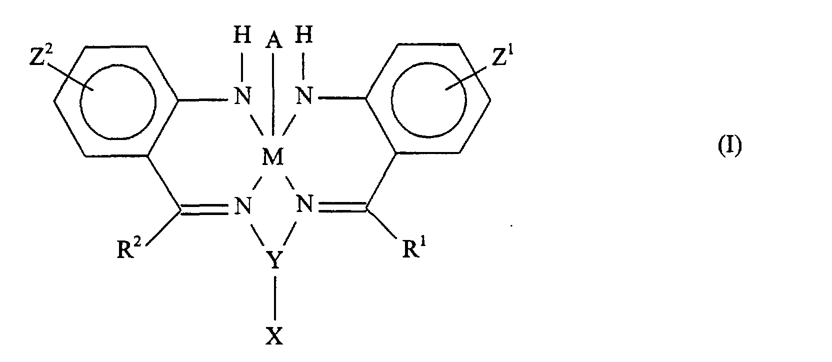 in der
- M: für Mangan, Cobalt, Kupfer, Eisen oder Ruthenium steht,
- Y: für einen Alkylen-, Alkenylen-, Phenylen- oder Cycloalkylenrest steht, welcher zusätzlich zum Substituenten X gegebenfalls alkyl- und/oder arylsubstituiert sein kann, mit insgesamt 1 bis 12 C-Atomen, wobei innerhalb Y der kürzeste Abstand zwischen den mit M komplexierenden N-Atomen 1 bis 5 C-Atome beträgt,
- X: für Wasserstoff, -OR³, -NO₂, -F, -Cl, -Br oder -J steht,
- R¹, R² und R³: unabhängig voneinander für Wasserstoff oder einen Alkylrest mit 1 bis 4 C-Atomen stehen,
- Z¹ und Z²: unabhängig voneinander für Wasserstoff oder einen elektronenverschiebenden Substituenten, insbesondere -CO₂Me, -SO₃Me oder -NO₂ stehen,
- Me: für Wasserstoff oder ein Alkalimetall wie Lithium, Natrium oder Kalium steht und
- A: entweder fehlt oder für einen ladungsausgleichenden Anionliganden steht,
als Aktivatoren für insbesondere anorganische Persauerstoffverbindungen in Oxidations-, Wasch-, Reinigungs- oder Desinfektionslösungen.

Die Übergangsmetalle (M in Formel I) in den erfindungsgemäß verwendeten Komplexen gemäß Formel (I) können je nach Metall Oxidationsstufen im Bereich von +1 bis +5 aufweisen, wobei Metalle mit der Oxidationsstufe +3 bevorzugt sind. Zu den bevorzugten Übergangsmetallen gehören Cobalt und Kupfer.

Zu den bevorzugten Verbindungen gemäß Formel (I) gehören solche, in denen Y eine Methylengruppe, 1,2-Ethylengruppe, 1,3-Propylengruppe, in Position 2 hydroxy- oder nitrosubstituierte 1,3-Propylengruppe, 1,2-Cylcloalkylengruppe mit 4 bis 6 C-Atomen, insbesondere eine 1,2-Cyclohexylengruppe, oder eine o-Phenylengruppe ist.

Zu den elektronenverschiebenden Substitutenten Z¹ und Z² in Formel (I) gehören die Hydroxygruppe, Carboxylgruppen, Sulfogruppen, Alkoxygruppen mit 1 bis 4 C-Atomen, Aryloxygruppen, die Nitrogruppe, Halogene wie Fluor, Chlor, Brom und Jod, die Aminogruppe, welche auch mono- oder dialkyliert oder -aryliert sein kann, lineare oder verzweigtkettige Alkylgruppen mit 1 bis 4 C-Atomen, Cycloalkylgruppen mit 3 bis 6 C-Atomen, lineare oder verzweigtkettige Alkenylgruppen mit 2 bis 5 C-Atomen, und Arylgruppen, welche ihrerseits die vorgenannten Substituenten tragen können. Vorzugsweise weisen die Alkenylgruppen, welche 1 oder 2 C-C-Doppelbindungen enthalten können, mindestens eine Doppelbindung in Konjugation zum Benzolring auf. Zu den bevorzugten Alkenylsubstituenten gehören die Allyl- und die Vinylgruppe. Vorzugsweise stehen die Substituenten Z¹ und Z² in 5-Stellung. Zu den bevorzugt verwendeten Verbindungen gemäß Formel (I) gehören solche, bei denen Z¹ und Z² identisch sind.

Zu den Alkylresten mit 1 bis 4 C-Atomen, insbesondere R¹, R² und R³, gehören insbesondere die Methyl-, Ethyl-, n-Propyl-, iso-Propyl-, n-Butyl-, sec-Butyl-, iso-Butyl- und tert-Butyl-Gruppe.

Der ladungsausgleichende Anionligand A in den Verbindungen der Formel (I), der auch fehlen kann, wenn der Komplex ungeladen ist, kann ein- oder mehrwertig sein, wobei er im letzteren Fall gegebenenfalls auch entsprechend mehrere Übergangsmetall-Atome mit den genannten organischen N₄-Liganden neutralisieren kann. Vorzugsweise handelt es sich um ein Halogenid, insbesondere Chlorid, ein Hydroxid, Hexafluorophosphat, Perchlorat oder um das Anion einer Carbonsäure, wie Formiat, Acetat, Benzoat oder Citrat. Falls insbesondere bei einwertigen Anionliganden die Anwesenheit nur eines Anionliganden zum Ladungsausgleich nicht ausreicht, sind dementsprechend mehrere Anionliganden A in den Verbindungen der Formel (I) vorhanden.

Die erfindungsgemäß verwendeten Verbindungen gemäß Formel (I) können nach im Prinzip bekannten Verfahren oder in Anlehnung daran durch Umsetzung des organischen N₄-Liganden, der aus der Reaktion von o-Aminobenzaldehyd beziehungsweise dessen formalen Derivaten mit Bisaminen zugänglich ist, gelöst in entsprechenden Lösungsmitteln wie Ethanol, mit Übergangsmetall-Salzen hergestellt werden, wie von B.M. Higson und E.D. McKenzie in J. Chem. Soc., Dalton Trans., 1972, Seiten 269 bis 280, beschrieben. Die Herstellung von Übergangsmetall(III)-Komplexen kann durch Umsetzung von Übergangsmetall(II)-Salze mit dem organischen N₄-Liganden und anschließender Oxidation, beispielsweise mit Hilfe von Luft, erfolgen.

Ein derartiger Übergangsmetall-Bleichkatalysator gemäß Formel (I) wird vorzugsweise zum Bleichen von Farbanschmutzungen beim Waschen von Textilien, insbesondere in wäßriger, tensidhaltiger Flotte, verwendet. Die Formulierung "Bleichen von Farbanschmutzungen" ist dabei in ihrer weitesten Bedeutung zu verstehen und umfaßt sowohl das Bleichen von sich auf dem Textil befindendem Schmutz, das Bleichen von in der Waschflotte befindlichem, vom Textil abgelösten Schmutz als auch das oxidative Zerstören von sich in der Waschflotte befindenden Textilfarben, die sich unter den Waschbedingungen von Textilien ablösen, bevor sie auf andersfarbige Textilien aufziehen können.

Ein weiterer Verwendungszweck derartiger Übergangsmetall-Bleichkatalysatoren ergibt sich in Reinigungslösungen für harte Oberflächen, insbesondere für Geschirr, zum Bleichen von gefärbten Anschmutzungen. Dabei wird unter dem Begriff der Bleiche sowohl das Bleichen von sich auf der harten Oberfläche befindendem Schmutz, insbesondere Tee, als auch das Bleichen von in der Geschirrspülflotte befindlichem, von der harten Oberfläche abgelösten Schmutz verstanden.

Weitere Gegenstände der Erfindung sind Wasch-, Reinigungs- und Desinfektionsmittel, die eine Persauerstoffverbindung und die einen obengenannten Übergangsmetall-Bleichkatalysator enthalten und ein Verfahren zur Aktivierung von Persauerstoffverbindungen unter Einsatz eines derartigen Bleichkatalysators.

In einer besonderen Ausgestaltung betrifft die Erfindung Reinigungsmittel für harte Oberflächen, insbesondere Reinigungsmittel für Geschirr und unter diesen vorzugsweise solche für den Einsatz in maschinellen Reinigungsverfahren, die einen oben beschriebenen Bleichkatalysator gemäß Formel (I) enthalten, und ein Verfahren zur Reinigung von harten Oberflächen, insbesondere von Geschirr, unter Einsatz eines derartigen Bleichkatalysators. Erfindungsgemäße Mittel zur Reinigung von Geschirr können sowohl in Haushaltsgeschirrspülmaschinen wie auch in gewerblichen Spülmaschinen eingesetzt werden. Die Zugabe erfolgt von Hand oder mittels geeigneter Dosiervorrichtungen. Die Anwendungskonzentrationen der Mittel in der Reinigungsflotte betragen in der Regel etwa 1 bis 8 g/l, vorzugsweise 2 bis 5 g/l.

Bei dem erfindungsgemäßen Verfahren und im Rahmen einer erfindungsgemäßen Verwendung kann der Bleichkatalysator im Sinne eines Aktivators überall dort eingesetzt werden, wo es auf eine besondere Steigerung der Oxidationswirkung der Persauerstoffverbindungen bei niedrigen Temperaturen ankommt, beispielsweise bei der Bleiche von Textilien oder Haaren, bei der Oxidation organischer oder anorganischer Zwischenprodukte und bei der Desinfektion.

Die erfindungsgemäße Verwendung besteht im wesentlichen darin, Bedingungen zu schaffen, unter denen die Persauerstoffverbindung und der Bleichkatalysator miteinander reagieren können, mit dern Ziel, stärker oxidierend wirkende Folgeprodukte zu erhalten. Solche Bedingungen liegen insbesondere dann vor, wenn beide Reaktionspartner in wäßriger Lösung aufeinandertreffen. Dies kann durch separate Zugabe der Persauerstoffverbindung und des Bleichkatalysators zu einer gegebenenfalls wasch- oder reinigungsmittelhaltigen Lösung geschehen. Besonders vorteilhaft wird das erfindungsgemäße Verfahren jedoch unter Verwendung eines erfindungsgemäßen Wasch-, Reinigungs- oder Desinfektionsmittels, das den Bleichkatalysator und gegebenenfalls ein peroxidisches Oxidationsmittel enthält, durchgeführt. Die Persauerstoffverbindung kann auch separat, in Substanz oder als vorzugsweise wäßrige Lösung oder Suspension, zur Wasch-, Reinigungs- beziehungsweise Desinfektionslösung zugegeben werden, wenn ein persauerstofffreies Mittel verwendet wird.

Je nach Verwendungszweck können die Bedingungen weit variiert werden. So kommen neben rein wäßrigen Lösungen auch Mischungen aus Wasser und geeigneten organischen Lösungsmitteln als Reaktionsmedium in Frage. Die Einsatzmengen an Persauerstoffverbindungen werden im allgemeinen so gewählt, daß in den Lösungen zwischen 10 ppm und 10 % Aktivsauerstoff, vorzugsweise zwischen 50 und 5000 ppm Aktivsauerstoff vorhanden sind. Auch die verwendete Menge an bleichkatalysierender Übergangsmetallverbindung gemäß Formel (I) hängt vom Anwendungszweck ab. Je nach gewünschtem Aktivierungsgrad werden 0,00001 Mol bis 0,025 Mol, vorzugsweise 0,0001 Mol bis 0,002 Mol Übergangsmetallverbindung pro Mol Persauerstoffverbindung verwendet, doch können in besonderen Fällen diese Grenzen auch über- oder unterschritten werden. Insbesondere wenn der Einsatz von Übergangsmetall(III)-Komplexen gewünscht ist, ist es im Rahmen des erfindungsgemäßen Verfahrens und der erfindungsgemäßen Verwendung auch möglich, einen Vorläufer der Komplex-Verbindung gemäß Formel (I) in Form eines entsprechenden Komplexes einzusetzen, dem der Ligand A fehlt und in dem das Übergangsmetall eine niedrigere Oxidationsstufe, zum Beispiel +2, aufweist, aus dem sich unter Einwirkung der Persauerstoffverbindung ein Übergangsmetall(III)-Komplex gemäß Formel (I) bildet.

Ein erfindungsgemäßes Wasch-, Reinigungs- oder Desinfektionsmittel enthält in der Regel bis zu 1 Gew.-%, vorzugsweise 0,0025 Gew.-% bis 0,25 Gew.-%, insbesondere 0,01 Gew.-% bis 0,1 Gew.-% des Übergangsmetall-Bleichkatalysators gemäß Formel (I) neben üblichen, mit dem Bleichkatalysator verträglichen Inhaltsstoffen. Ein erfindungsgemäßes Reinigungsmittel für harte Oberflächen, insbesondere für Geschirr, enthält vorzugsweise 0,001 Gew.-% bis 1 Gew.-%, insbesondere 0,005 Gew.-% bis 0,1 Gew.-% eines derartigen Bleichkatalysators neben üblichen, mit dem Bleichkatalysator verträglichen Inhaltsstoffen. Der Bleichkatalysator kann in im Prinzip bekannter Weise an Trägerstoffen adsorbiert und/oder in Hüllsubstanzen eingebettet sein.

Die erfindungsgemäßen Wasch-, Reinigungs- und Desinfektionsmittel, die als insbesondere pulverförmige Feststoffe, in nachverdichteter Teilchenform, als homogene Lösungen oder Suspensionen vorliegen können, können außer dem erfindungsgemäß verwendeten Bleichkatalysator im Prinzip alle bekannten und in derartigen Mitteln üblichen Inhaltsstoffe enthalten. Die erfindungsgemäßen Wasch- und Reinigungsmittel können insbesondere Buildersubstanzen, oberflächenaktive Tenside, organische und/oder anorganische Persauerstoffverbindungen, wassermischbare organische Lösungsmittel, Enzyme, Sequestrierungsmittel, Elektrolyte, pH-Regulatoren und weitere Hilfsstoffe, wie optische Aufheller, Vergrauungsinhibitoren, Farbübertragungsinhibitoren, Schaumregulatoren, zusätzliche Persauerstoff-Aktivatoren, Farb- und Duftstoffe enthalten.

Die erfindungsgemäßen Mittel können Tenside enthalten, wobei insbesondere anionische Tenside, nichtionische Tenside und deren Gemische in Frage kommen. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkylaminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomem im Alkylrest brauchbar.

Geeignete anionische Tenside sind insbesondere Seifen und solche, die Sulfat- oder Sulfonat-Gruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Tenside sind in den erfindungsgemäßen Reinigungs- oder Waschmitteln in Mengenanteilen von vorzugsweise 5 Gew.-% bis 50 Gew.-%, insbesondere von 8 Gew.-% bis 30 Gew.-%, enthalten, während die erfindungsgemäßen Desinfektionsmittel wie auch erfindungsgemäße Mittel zur Reinigung von Geschirr vorzugsweise 0,1 Gew.-% bis 20 Gew.-%, insbesondere 0,2 Gew.-% bis 5 Gew.-% Tenside enthalten.

Als geeignete Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Reinigungsbedingungen Wasserstoffperoxid abgebende anorganische Salze, wie Perborat, Percarbonat und/oder Persilikat, in Betracht. Wasserstoffperoxid kann dabei auch mit Hilfe eines enzymatischen Systems, das heißt einer Oxidase und ihres Substrats, erzeugt werden Sofern feste Perverbindungen eingesetzt werden sollen, können diese in Form von Pulvern oder Granulaten verwendet werden, die auch in im Prinzip bekannter Weise umhüllt sein können. Die Persauerstoffverbindungen können als solche oder in Form diese enthaltender Mittel, die prinzipiell alle üblichen Wasch-, Reinigungs- oder Desinfektionsmittelbestandteile enthalten können, zu der Wasch- beziehungsweise Reinigungslauge zugegeben werden. Besonders bevorzugt wird Alkalipercarbonat, Alkaliperborat-Monohydrat oder Wasserstoffperoxid in Form wäßriger Lösungen, die 3 Gew.-% bis 10 Gew.-% Wasserstoffperoxid enthalten, eingesetzt. Der Einsatz von Natriumpercarbonat hat insbesondere in Reinigungsmitteln für Geschirr Vorteile, da es sich besonders günstig auf das Korrosionsverhalten an Gläsern auswirkt. Falls ein erfindungsgemäßes Wasch- oder Reinigungsmittel Persauerstoffverbindungen enthält, sind diese in Mengen von vorzugsweise bis zu 50 Gew.-%, insbesondere von 5 Gew.-% bis 30 Gew.-%, vorhanden, während in den erfindungsgemäßen Desinfektionsmitteln vorzugsweise von 0,5 Gew.-% bis 40 Gew.-%, insbesondere von 5 Gew.-% bis 20 Gew.-%, an Persauerstoffverbindungen enthalten sind. Der Zusatz geringer Mengen bekannter Bleichmittelstabilisatoren wie beispielsweise von Phosphonaten, Boraten beziehungsweise Metaboraten und Metasilikaten sowie Magnesiumsalzen wie Magnesiumsulfat kann zweckdienlich sein.

Ein erfindungsgemäßes Mittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, insbesondere die durch Oxidation von Polysacchariden beziehungsweise Dextrinen zugänglichen Polycarboxylate der internationalen Patentanmeldung WO 93/16110 beziehungsweise der internationalen Patentanmeldung WO 92/18542 oder der europäischen Patentschrift EP 0 232 202, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5 000 und 200 000, die der Copolymeren zwischen 2 000 und 200 000, vorzugsweise 50 000 bis 120 000, jeweils bezogen auf freie Säure. Ein besonders bevorzugtes Acrylsäure-Maleinsäure-Copolymer weist eine relative Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere lassen sich insbesondere nach Verfahren herstellen, die in der deutschen Patentschrift DE 42 21 381 und der deutschen Patentanmeldung DE 43 00 772 beschrieben sind, und weisen im allgemeinen eine relative Molekülmasse zwischen 1 000 und 200 000 auf. Weitere bevorzugte Copolymere sind solche, die in den deutschen Patentanmeldungen DE 43 03 320 und DE 44 17 734 beschrieben werden und als Monomere vorzugsweise Acrolein und Acrylsäure/Acrylsäuresalze beziehungsweise Vinylacetat aufweisen. Die organischen Buildersubstanzen können, insbesondere zur Herstellung flüssiger Mittel, in Form wäßriger Lösungen, vorzugsweise in Form 30-bis 50-gewichtsprozentiger wäßriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere Alkalisilikate und Polyphosphate, vorzugsweise Natriumtriphosphat, in Betracht. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Solche mit einem molaren Verhältnis Na₂O:SiO₂ von 1:1,9 bis 1:2,8 können nach dem Verfahren der europäischen Patentanmeldung EP 0 425 427 hergestellt werden. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁·y H₂O eingesetzt, in der x, das sogenannte Modul, eine Zahl von 1,9 bis 4 und y eine Zahl von 0 bis 20 ist und bevorzugte Werte für x 2, 3 oder 4 sind. Kristalline Schichtsilikate, die unter diese allgemeine Formel fallen, werden beispielsweise in der europäischen Patentanmeldung EP 0 164 514 beschrieben. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O₅·y H₂O) bevorzugt, wobei β-Natriumdisilikat beispielsweise nach dem Verfahren erhalten werden kann, das in der internationalen Patentanmeldung WO 91/08171 beschrieben ist. δ-Natriumsilikate mit einem Modul zwischen 1,9 und 3,2 können gemäß den japanischen Patentanmeldungen JP 04/238 809 oder JP 04/260 610 hergestellt werden. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, herstellbar wie in den europäischen Patentanmeldungen EP 0 548 599, EP 0 502 325 und EP 0 452 428 beschrieben, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es nach dem Verfahren der europäischen Patentanmeldung EP 0 436 835 aus Sand und Soda hergestellt werden kann. Kristalline Natriumsilikate mit einem Modul im Bereich von 1,9 bis 3,5, wie sie nach den Verfahren der europäischen Patentschriften EP 0 164 552 und/oder EP 0 293 753 erhältlich sind, werden in einer weiteren bevorzugten Ausführungsform erfindungsgemäßer Mittel eingesetzt. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind in den erfindungsgemäßen Wasch- oder Reinigungsmitteln vorzugsweise in Mengen bis zu 60 Gew.-%, insbesondere von 5 Gew.-% bis 40 Gew.-%, enthalten, während die erfindungsgemäßen Desinfektionsmittel vorzugsweise frei von den lediglich die Komponenten der Wasserhärte komplexierenden Buildersubstanzen sind und bevorzugt nicht über 20 Gew.-%, insbesondere von 0,1 Gew.-% bis 5 Gew.-%, an schwermetallkomplexierenden Stoffen, vorzugsweise aus der Gruppe umfassend Aminopolycarbonsäuren, Aminopolyphosphonsäuren und Hydroxypolyphosphonsäuren und deren wasserlösliche Salze sowie deren Gemische, enthalten.

Zu den in erfindungsgemäßen Mitteln verwendbaren Enzymen gehören Proteasen, Amylasen, Pullulanasen, Cutinasen, Lipasen, Cellulasen und/oder Hemicellulasen, beispielsweise Proteasen wie BLAP®, Optimase®, Opticlean®, Maxacal®, Maxapem®, Durazym®, Purafect® OxP, Alcalase®, Esperase® und/oder Savinase®, Amylasen wie Termamyl®, Amylase-LT®, Maxamyl®, Duramyl®, Lipasen wie Lipolase®, Lipomax®, Lumafast® und/oder Lipozym® und/oder Cellulasen wie Celluzyme® und/oder Carezyme®. Zur Verstärkung der Bleichwirkung gegenüber bestimmten Anschmutzungen und/oder der oxidativen Zestörung bestimmter Farbstoffe können die Mittel Peroxidasen und/oder Oxidasen enthalten. Besonders geeignet sind aus Pilzen oder Bakterien, wie Bacillus subtilis, Bacillus licheniformis, Streptomyces griseus, Humicola lanuginosa, Humicola insolens, Pseudomonas pseudoalcaligenes oder Pseudomonas cepacia gewonnene enzymatische Wirkstoffe. Die gegebenenfalls verwendeten Enzyme können, wie zum Beispiel in den internationalen Patentanmeldungen WO 92/11347 oder WO 94/23005 beschrieben, an Trägerstoffen adsorbiert und/oder in Hüllsubstanzen eingebettet sein, um sie gegen vorzeitige Inaktivierung zu schützen. Sie sind in den erfindungsgemäßen Wasch-, Reinigungs- und Desinfektionsmitteln in Mengen von vorzugsweise bis zu 10 Gew.-%, insbesondere von 0,2 Gew.-% bis 5 Gew.-%, enthalten.

Zu den in den erfindungsgemäßen Mitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Wasch-, Reinigungs- und Desinfektionsmitteln vorzugsweise nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln vorzugsweise nicht über 20 Gew.-%, insbesondere von 1,2 Gew.-% bis 17 Gew.-%, enthalten.

Ein erfindungsgemäßes Reinigungsmittel für harte Oberflächen kann darüber hinaus abrasiv wirkende Bestandteile, insbesondere aus der Gruppe umfassend Quarzmehle, Holzmehle, Kunststoffmehle, Kreiden und Mikroglaskugeln sowie deren Gemische, enthalten. Abrasivstoffe sind in den erfindungsgemäßen Reinigungsmitteln vorzugsweise in Mengen nicht über 20 Gew.-%, insbesondere von 5 Gew.-% bis 15 Gew.-%, enthalten.

Ein erfindungsgemäßes Mittel zum maschinellen Reinigen von Geschirr enthält vorzugsweise 15 Gew.-% bis 60 Gew.-%, insbesondere 20 Gew.-% bis 50 Gew.-% wasserlösliche Builderkomponente, 5 Gew.-% bis 25 Gew.-%, insbesondere 8 Gew.-% bis 17 Gew.-% Bleichmittel auf Sauerstoffbasis, jeweils bezogen auf das gesamte Mittel, und einen bleichkatalysierenden Komplex gemäß Formel (I) insbesondere in Mengen von 0,005 Gew.-% bis 0,1 Gew.-%. Ein derartiges Mittel ist insbesondere niederalkalisch, das heißt seine 1-gewichtsprozentige Lösung weist einen pH-Wert von 8 bis 11,5, vorzugsweise 9 bis 10,5 auf.

Als wasserlösliche Builderkomponenten für erfindungsgemäße Reinigungsmittel, insbesondere für derartige niederalkalische Reinigungsmittel, kommen prinzipiell alle in Mitteln für die maschinelle Reinigung von Geschirr üblicherweise eingesetzten Builder in Frage, zum Beispiel oben erwähnte polymere Alkaliphosphate, die in Form ihrer alkalischen neutralen oder sauren Natrium- oder Kaliumsalze vorliegen können. Beispiele hierfür sind Trinatriumphosphat, Tetranatriumdiphosphat, Dinatriumdihydrogendiphosphat, Pentanatriumtriphosphat, sogenanntes Natriumhexametaphosphat sowie die entsprechenden Kaliumsalze beziehungsweise Gemische aus Natrium- und Kaliumsalzen. Ihre Mengen können im Bereich von bis zu etwa 60 Gew.-%, insbesondere 5 Gew.-% bis 20 Gew.-%, bezogen auf das gesamte Mittel liegen. Weitere mögliche wasserlösliche Builderkomponenten sind neben Polyphosphonaten und Phosphonatalkylcarboxylaten zum Beispiel organische Polymere nativen oder synthetischen Ursprungs vom Typ der Polycarboxylate, die insbesondere in Hartwasserregionen als Co-Builder wirken. In Betracht kommen beispielsweise Polyacrylsäuren und Copolymere aus Maleinsäureanhydrid und Acrylsäure sowie die Natriumsalze dieser Polymersäuren. Handelsübliche Produkte sind zum Beispiel Sokalan® CP 5, CP 10 und PA 30 der Firma BASF. Zu den als Co-Builder brauchbaren Polymeren nativen Ursprungs gehören beispielsweise oxidierte Stärke, wie zum Beispiel aus der internationalen Patentanmeldung WO 94/05762 bekannt, und Polyaminosäuren wie Polyglutaminsäure oder Polyasparaginsäure. Weitere mögliche Builderkomponenten sind natürlich vorkommende Hydroxycarbonsäuren wie zum Beispiel Mono-, Dihydroxybernsteinsäure, α-Hydroxypropionsäure und Gluconsäure. Zu den bevorzugten Builderkomponenten gehören die Salze der Citronensäure, insbesondere Natriumcitrat. Als Natriumcitrat kommen wasserfreies Trinatriumcitrat und vorzugsweise Trinatriumcitratdihydrat in Betracht. Trinatriumcitratdihydrat kann als fein- oder grobkristallines Pulver eingesetzt werden. In Abhängigkeit vom letztlich in den erfindungsgemäßen Mitteln eingestellten pH-Wert können auch die zu den genannten Co-Builder-Salzen korrespondierenden Säuren vorliegen. Vorzugsweise sind die erfindungsgemäßen maschinellen Geschirreinigungsmittel niederalkalisch und enthalten die üblichen Alkaliträger wie zum Beispiel Alkalisilikate, Alkalicarbonate und/oder Alkalihydrogencarbonate. Zu den üblicherweise eingesetzten Alkaliträgern zählen Carbonate, Hydrogencarbonate und Alkalisilikate mit einem Molverhältnis SiO₂/M₂O (M = Alkaliatom) von 1,5 : 1 bis 2,5 : 1. Alkalisilikate können dabei in Mengen von bis zu 30 Gew.-%, bezogen auf das gesamte Mittel, enthalten sein. Auf den Einsatz der hoch alkalischen Metasilikate als Alkaliträger wird vorzugsweise ganz verzichtet. Das in den erfindungsgemäßen Mitteln zur Reinigung von Geschirr bevorzugt eingesetzte Alkaliträgersystem ist ein Gemisch aus Carbonat und Hydrogencarbonat, vorzugsweise Natriumcarbonat und -hydrogencarbonat, das in einer Menge von bis zu 60 Gew.-%, vorzugsweise 10 Gew.-% bis 40 Gew.-%, enthalten ist. Je nachdem, welcher pH-Wert letztendlich gewünscht wird, variiert das Verhältnis von eingesetztem Carbonat und eingesetztem Hydrogencarbonat, üblicherweise wird jedoch ein Überschuß an Natriumhydrogencarbonat eingesetzt, so daß das Gewichtsverhältnis zwischen Hydrogencarbonat und Carbonat im allgemeinen 1 : 1 bis 15 : 1 beträgt. In einer weiteren Ausführungsform erfindungsgemäßer Mittel zur Reinigung von Geschirr sind 20 Gew.-% bis 40 Gew.-% wasserlöslicher organischer Builder, insbesondere Alkalicitrat, 5 Gew.-% bis 15 Gew. -% Alkalicarbonat und 20 Gew.-% bis 40 Gew.-% Alkalidisilikat enthalten.

Ein erfindungsgemäßes Desinfektionsmittel kann zur Verstärkung der Desinfektionswirkung gegenüber speziellen Keimen zusätzlich zu den bisher genannten Inhaltsstoffen übliche antimikrobielle Wirkstoffe enthalten. Derartige antimikrobielle Zusatzstoffe sind in den erfindungsgemäßen Desinfektionsmitteln vorzugsweise nicht über 10 Gew.-%, besonders bevorzugt von 0,1 Gew.-% bis 5 Gew.-%, enthalten.

Zusätzlich zu den Übergangsmetall-Bleichkatalysatoren gemäß Formel (I) können übliche als die Bleiche aktivierend bekannte Übergangsmetallkomplexe und/oder, insbesondere in Kombination mit anorganischen Persauerstoffverbindungen, bevorzugt konventionelle Bleichaktivatoren, das heißt Verbindungen, die unter Perhydrolysebedingungen Peroxocarbonsäuren, insbesondere gegebenenfalls substituierte Perbenzoesäure und/oder aliphatische Peroxocarbonsäuren mit 1 bis 10 C-Atomen, insbesondere 2 bis 4 C-Atomen ergeben, zum Einsatz kommen. Geeignet sind die eingangs zitierten üblichen Bleichaktivatoren, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), acylierte Phenolsulfonate, insbesondere Nonanoyl- oder Isononanoyloxybenzolsulfonat, acylierte mehrwertige Alkohole, insbesondere Triacetin, Ethylenglykoldiacetat und 2,5-Diacetoxy-2,5-dihydrofuran sowie acetyliertes Sorbit und Mannit, und acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton. Auch die aus der deutschen Patentanmeldung DE 44 43 177 bekannten Kombinationen konventioneller Bleichaktivatoren können eingesetzt werden. Vorzugsweise ist in erfindungsgemäßen Mitteln zusätzlich zu den Komplexen gemäß Formel (I) bis zu 10 Gew.-%, insbesondere 0,5 Gew.-% bis 5 Gew.-% unter Perhydrolysebedingungen Peroxocarbonsäure abspaltende Verbindung anwesend.

Obwohl manche Übergangsmetallkomplexe bekanntermaßen der Korrosion von Silber entgegenwirken können, werden die erfindungsgemäß bleichkatalysierenden Komplexe gemäß allgemeiner Formel (I) in der Regel in Mengen eingesetzt, die zu gering sind, um einen Silberkorrosionsschutz zu bewirken, so daß in erfindungsgemäßen Reinigungsmitteln für Geschirr Silberkorrosionsinhibitoren noch zusätzlich eingesetzt werden können. Bevorzugte Silberkorrosionsschutzmittel sind organische Sulfide wie Cystin und Cystein, zwei- oder dreiwertige Phenole, gegebenenfalls alkyl- oder arylsubstituierte Triazole wie Benzotriazol, Isocyanursäure, Mangan-, Titan-, Zirkonium-, Hafnium-, Vanadium- oder Cersalze und/oder -komplexe, in denen die genannten Metalle je nach Metall in einer der Oxidationsstufen II, III, IV, V oder VI vorliegen.

Die Herstellung fester erfindungsgemäßer Mittel bereitet keine Schwierigkeiten und kann in im Prinzip bekannter Weise, zum Beispiel durch Sprühtrocknen oder Granulation, erfolgen, wobei Persauerstoffverbindung und Bleichkatalysator gegebenenfalls später zugesetzt werden. Zur Herstellung erfindungsgemäßer Mittel mit erhöhtem Schüttgewicht, insbesondere im Bereich von 650 g/l bis 950 g/l, ist ein aus der europäischen Patentschrift EP 486 592 bekanntes, einen Extrusionschritt aufweisendes Verfahren bevorzugt. Erfindungsgemäße Wasch-, Reinigungs- oder Desinfektionsmittel in Form wäßriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt. In einer bevorzugten Ausführung von Mitteln für die insbesondere maschinelle Reinigung von Geschirr sind diese tablettenförmig und können in Anlehnung an die in den europäischen Patentschriften EP 0 579 659 und EP 0 591 282 offenbarten Verfahren hergestellt werden. Dabei geht man vorzugsweise derart vor, daß man alle Bestandteile in einem Mischer miteinander vermischt und das Gemisch mittels herkömmlicher Tablettenpressen, beispielsweise Exzenterpressen oder Rundläuferpressen, mit Preßdrucken im Bereich von 200·10⁵ Pa bis 1 500·10⁵ Pa verpresst. Man erhält so problemlos bruchfeste und dennoch unter Anwendungsbedingungen ausreichend schnell lösliche Tabletten mit Biegefestigkeit von normalerweise über 150 N. Vorzugsweise weist eine derart hergestellte Tablette ein Gewicht von 15 g bis 40 g, insbesondere von 20 g bis 30 g bei einem Durchmesser von 35 mm bis 40 mm auf.

### Beispiele

### Beispiel 1

In einer Lösung, die 2,5 mg Morin in 99,5 ml vollentsalztem Wassser enthielt, wurden 98 mg Natriumperborat-Monohydrat gelöst. Der pH-Wert wurde auf 9,5 eingestellt und mit Hilfe eines pH-Stat-Gerätes während der gesamten nachfolgenden Meßdauer bei diesem Wert gehalten. Ebenso wurde die Temperatur konstant bei 20 °C gehalten. 0,5 ml einer Lösung, die den zu testenden Bleichkatalysator in einer Konzentration von 50 ppm bezogen auf Übergangsmetall enthielt, wurden zugesetzt. Über einen Zeitraum von 30 Minuten wurde minütlich die Extinktion E der Lösung bei 400 nm gemessen. In der nachfolgenden Tabelle sind die Werte für die prozentuale Entfärbung D(t), berechnet nach D(t) = [E(0) - E(t)] / E(0) * 100, angegeben.

Getestet wurden die nach bekannten Verfahren hergestellten Komplexe 1,2-Bis(o-iminobenzyliden-amino)-1,2-cyclohexan]-cobalt(III)-chlorid (**E1**; Formel (I) mit M = Co, R = 1,2-Cyclohexylen, R¹ = R² = X = Z¹ = Z² = H, A = Cl) und dessen Kombination mit 3 Gew.-% N,N,N',N'-Tetraacetyl-ethylendiamin (TAED; **E2**). Außerdem wurde der herkömmliche Bleichaktivator TAED unter ansonsten gleichen Bedingungen, aber in einer Konzentration von 6 Gew.-%, ebenfalls gestestet **(V1).**

**Tabelle 1:**

| Prozentuale Entfärbung in Abhängigkeit der Zeit | | | | |
|---|---|---|---|---|
| Substanz | 5 Minuten | 10 Minuten | 15 Minuten | 30 Minuten |
| **E1** | 14 | 25 | 34 | 50 |
| **E2** | 87 | 91 | 92 | 93 |
| **V1** | 23 | 50 | 66 | 84 |

Man erkennt, daß durch die erfindungsgemäße Verwendung eine signifikant bessere Bleichwirkung erreicht werden kann als durch den konventionellen Bleichaktivator TAED alleine.

## Patentansprüche

1. Verwendung von Übergangsmetall(III)-Komplexen der Formel (I), 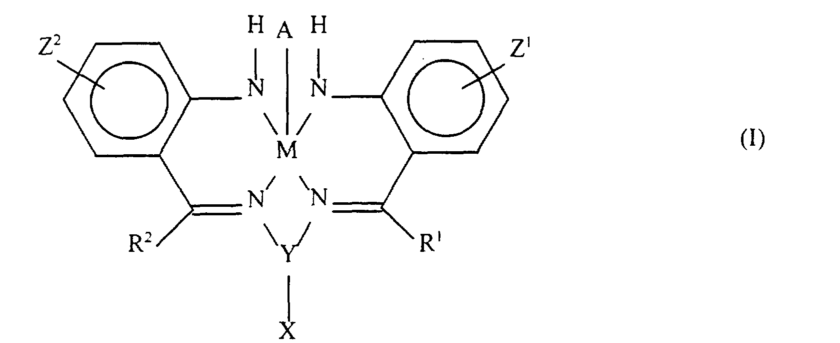 in der M für Mangan, Cobalt, Kupfer, Eisen oder Ruthenium steht, Y für einen Alkylen-, Alkenylen-, Phenylen- oder Cycloalkylenrest steht, welcher zusätzlich zum Substituenten X gegebenfalls alkyl- und/oder arylsubstituiert sein kann, mit insgesamt 1 bis 12 C-Atomen, wobei innerhalb Y der kürzeste Abstand zwischen den mit M komplexierenden N-Atomen 1 bis 5 C-Atome beträgt. X für Wasserstoff, -OR³, -NO₂, -F, -Cl, -Br oder -J steht, R¹, R² und R³ unabhängig voneinander für Wasserstoff oder einen Alkylrest mit 1 bis 4 C-Atomen stehen, Z¹ und Z² unabhängig voneinander für Wasserstoff oder einen elektronenverschiebenden Substituenten, insbesondere -CO₂Me, -SO₃Me oder -NO₂ stehen, Me für Wasserstoff oder ein Alkalimetall wie Lithium, Natrium oder Kalium steht und A für einen ladungsausgleichenden Anionliganden steht, als Aktivatoren für Persauerstoffverbindungen, insbesondere anorganische Persauerstoffverbindungen, in Oxidations-, Wasch-, Reinigungs- oder Desinfektionslösungen.

2. Verwendung von Übergangsmetall(III)-Komplexen der Formel (I) zum Bleichen von Farbanschmutzungen beim Waschen von Textilien in Gegenwart von Persauerstoffverbindungen.

3. Verwendung von Übergangsmetall(III)-Komplexen der Formel (I) in Reinigungslösungen für harte Oberflächen, insbesondere für Geschirr, in Gegenwart von Persauerstoffverbindungen zum Bleichen von gefärbten Anschmutzungen.

4. Verwendung nach einem der Ansprüche 1 bis 3, **dadurch gekennzeichnet, daß** das Übergangsmetall M in der Verbindung nach Formel (I) Cobalt oder Kupfer ist.

5. Verwendung nach einem der Ansprüche 1 bis 4, **dadurch gekennzeichnet, daß** in der Verbindung gemäß Formel (I) Y eine Methylengruppe, 1,2-Ethylengruppe, 1,3-Propylengruppe, in Position 2 hydroxy- oder nitrosubstituierte 1,3-Propylengruppe, 1,2-Cylcloalkylengruppe mit 4 bis 6 C-Atomen, insbesondere eine 1,2-Cyclohexylengruppe, oder eine o-Phenylengruppe ist.

6. Verwendung nach einem der Ansprüche 1 bis 5, **dadurch gekennzeichnet, daß** Z¹ und Z² in Formel (I) unter der Hydroxygruppe, Carboxylgruppe, Sulfogruppe, Alkoxygruppen mit 1 bis 4 C-Atomen, Aryloxygruppen, der Nitrogruppe, den Halogenen, der Aminogruppe, welche auch mono- oder dialkyliert oder -aryliert sein kann, den linearen oder verzweigtkettigen Alkylgruppen mit 1 bis 4 C-Atomen, Cycloalkylgruppen mit 3 bis 6 C-Atomen, linearen oder verzweigtkettigen Alkenylgruppen mit 2 bis 5 C-Atomen, und Arylgruppen, welche ihrerseits die vorgenannten Substituenten tragen können, ausgewählt werden.

7. Verwendung nach einem der Ansprüche 1 bis 6, **dadurch gekennzeichnet, daß** Z¹ und Z² in Formel (I) unter den Alkenylgruppen, welche 1 oder 2 C-C-Doppelbindungen enthalten, wobei mindestens eine Doppelbindung in Konjugation zum Benzolring steht, ausgewählt werden.

8. Verwendung nach Anspruch 7, **dadurch gekennzeichnet, daß** die Alkenylgruppe die Allyl- oder Vinylgruppe ist.

9. Verwendung nach einem der Ansprüche 1 bis 8, **dadurch gekennzeichnet, daß** in den Verbindungen der Formel (I) die Substituenten Z¹ und Z² in 5-Stellung stehen und/oder identisch sind.

10. Verwendung nach einem der Ansprüche 1 bis 9, **dadurch gekennzeichnet, daß** der ladungsausgleichende Anionligand A in den Verbindungen der Formel (I) ein- oder mehrwertig ist, wobei er im letzteren Fall gegebenenfalls auch entsprechend mehrere Übergangsmetallatome mit den N₄-Liganden neutralisiert, und insbesondere ein Halogenid, ein Hydroxid, Hexafluorophosphat, Perchlorat oder das Anion einer Carbonsäure ist.

11. Verwendung nach einem der Ansprüche 1 bis 9, **dadurch gekennzeichnet, daß** R¹, R² und R³ unabhängig voneinander aus den Methyl-, Ethyl-, n-Propyl-, iso-Propyl-, n-Butyl-, sec-Butyl-, iso-Butyl- und tert-Butyl-Gruppen ausgewählt werden.

12. Verfahren zur Aktivierung von Persauerstoffverbindungen unter Einsatz eines Bleichkatalysators gemäß Formel (I).

13. Verfahren nach Anspruch 12, **dadurch gekennzeichnet, daß** die zu aktivierende Persauerstoffverbindung aus der Gruppe umfassend organische Persäuren, Wasserstoffperoxid, Perborat und Percarbonat sowie deren Gemische ausgewählt wird.

14. Verfahren nach Anspruch 12 oder 13, **dadurch gekennzeichnet, daß** man 0,00001 Mol bis 0,025 Mol, insbesondere 0,0001 Mol bis 0,002 Mol Übergangsmetallverbindung pro Mol Persauerstoffverbindung verwendet,

15. Verfahren zur Reinigung von harten Oberflächen, insbesondere von Geschirr, unter Einsatz einer Verbindung der Formel (I) in Gegenwart von Persauerstoffverbindungen.

16. Wasch-, Reinigungs- oder Desinfektionsmittel, **dadurch gekennzeichnet, daß** es eine Persauerstoffverbindung und eine Komplex-Verbindung der allgemeinen Formel (I) neben üblichen, mit dem Komplex verträglichen Inhaltsstoffen enthält.

17. Mittel nach Anspruch 16, **dadurch gekennzeichnet, daß** es 0,0025 Gew.-% bis 0,25 Gew.-%, insbesondere 0,01 Gew.-% bis 0,1 Gew.-% der Verbindung der Formel (I) enthält.

18. Mittel nach Anspruch 16 zur Reinigung von Geschirr, insbesondere für den Einsatz in maschinellen Reinigungsverfahren, **dadurch gekennzeichnet, daß** es 0,001 Gew.-% bis 1 Gew.-%, insbesondere 0,005 Gew.-% bis 0,1 Gew.-% eines Bleichkatalysator gemäß Formel (I) enthält.

19. Mittel nach einem der Ansprüche 16 bis 18, **dadurch gekennzeichnet, daß** zusätzlich zum Komplex gemäß Formel (I), insbesondere in Mengen von 0,5 Gew.-% bis 5 Gew.-%, unter Perhydrolysebedingungen Peroxocarbonsäure abspaltende Verbindung anwesend ist.

## Claims

1. The use of transition metal (III) complexes corresponding to formula 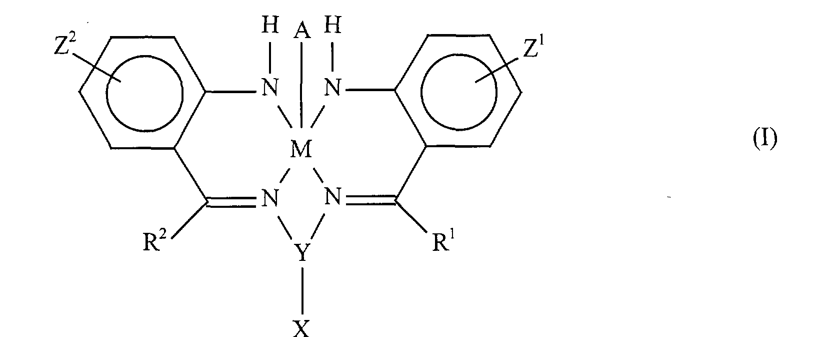 (1):
in which M is manganese, cobalt, copper, iron or ruthenium, Y is an alkylene, alkenylene, phenylene or cycloalkylene group with a total of 1 to 12 carbon atoms which, in addition to the substituent X, may optionally be alkyl- and/or aryl-substituted, the shortest distance between the N atoms complexing with M in Y being 1 to 5 carbon atoms, X is hydrogen, -OR³, -NO₂, -F, -Cl, -Br or -I, R¹, R² and R³ independently of one another represent hydrogen or an alkyl group containing 1 to 4 carbon atoms, Z¹ and Z² independently of one another represent hydrogen or an electrondisplacing substituent, more particularly -CO₂Me, -SO₃Me or -NO₂, Me is hydrogen or an alkali metal, such as lithium, sodium or potassium and A is a charge-compensating anion ligand,
as activators for peroxygen compounds, more particularly inorganic peroxygen compounds, in oxidation, washing, cleaning or disinfecting solutions.

2. The use of transition metal (III) complexes corresponding to formula (I) for bleaching coloured soils in the washing of textiles in the presence of peroxygen compounds.

3. The use of transition metal (III) complexes corresponding to formula (I) in cleaning solutions for hard surfaces, more particularly for tableware, in the presence of peroxygen compounds for bleaching coloured soils.

4. The use claimed in any of claims 1 to 3, **characterized in that** the transition metal M in the compound corresponding to formula (I) is cobalt or copper.

5. The use claimed in any of claims 1 to 4, **characterized in that**, in the compound corresponding to formula (I), Y is a methylene group, 1,2-ethylene group, 1,3-propylene group, 2-hydroxy- or -nitrosubstituted 1,3-propylene group, 1,2-cycloalkylene group containing 4 to 6 carbon atoms, more particularly a 1,2-cyclohexylene group, or an o-phenylene group.

6. The use claimed in any of claims 1 to 5, **characterized in that** Z¹ and Z² in formula (I) are selected from the hydroxy group, carboxyl group, sulfo group, alkoxy groups containing 1 to 4 carbon atoms, aryloxy groups, the nitro group, the halogens, the amino group which may also be mono- or dialkylated or -arylated, the linear or branched alkyl groups containing 1 to 4 carbon atoms, cycloalkyl groups containing 3 to 6 carbon atoms, linear or branched alkenyl groups containing 2 to 5 carbon atoms and aryl groups which in turn may bear the above-mentioned substituents.

7. The use claimed in any of claims 1 to 6, **characterized in that** Z¹ and Z² in formula (I) are selected from the alkenyl groups containing 1 or 2 C-C double bonds, at least one double bond being conjugated to the benzene ring.

8. The use claimed in claim 7, **characterized in that** the alkenyl group is the allyl or vinyl group.

9. The use claimed in any of claims 1 to 8, **characterized in that**, in the compounds of formula (I), the substituents Z¹ and Z² are in the 5 position and/or are identical.

10. The use claimed in any of claims 1 to 9, **characterized in that** the charge-compensating anion ligand A in the compounds of formula (I) is monovalent or polyvalent (in the latter case, it may optionally neutralize correspondingly several transition metal atoms with the N₄ ligands) and, more particularly, is a halide, a hydroxide, hexafluorophosphate, perchlorate or the anion of a carboxylic acid.

11. The use claimed in any of claims 1 to 9, **characterized in that** R¹, R² and R³ independently of one another are selected from the methyl, ethyl, n-propyl, isopropyl, n-butyl, sec.butyl, isobutyl and tert.butyl groups.

12. A process for activating peroxygen compounds using a bleach catalyst corresponding to formula (I).

13. A process as claimed in claim 12, **characterized in that** the peroxygen compound to be activated is selected from the group consisting of organic per acids, hydrogen peroxide, perborate and percarbonate and mixtures thereof.

14. A process as claimed in claim 12 or 13, **characterized in that** 0.00001 mol to 0.025 mol and more particularly 0.0001 mol to 0.002 mol transition metal compound is used per mol of peroxygen compound.

15. A process for cleaning hard surfaces, more particularly tableware, using a compound corresponding to formula (I) in the presence of peroxygen compounds.

16. A laundry detergent, dishwashing detergent or disinfectant, **characterized in that** it contains a peroxygen compound and a complex compound corresponding to general formula (I) besides typical ingredients compatible with the complex.

17. A composition as claimed in claim 16, **characterized in that** it contains 0.0025% by weight to 0.25% by weight and more particularly 0.01% by weight to 0.1% by weight of the compound corresponding to formula (I).

18. A dishwashing detergent as claimed in claim 16, more particularly for use in dishwashing machines, **characterized in that** it contains 0.001% by weight to 1% by weight and more particularly 0.005% by weight to 0.1% by weight of a bleach catalyst corresponding to formula (I).

19. A composition as claimed in any of claims 16 to 18, **characterized in that** it contains a compound eliminating peroxocarboxylic acid under perhydrolysis conditions, more particularly in quantities of 0.5% by weight to 5% by weight, in addition to the complex corresponding to formula (I).

## Revendications

1. Utilisation de complexes de métal(III) de transition de formule (I), 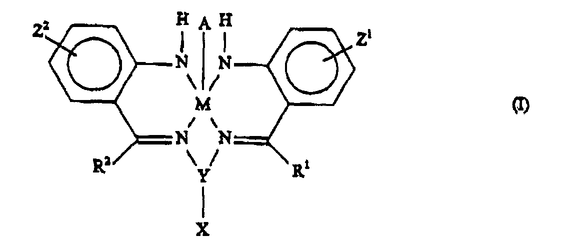
dans laquelle M représente le manganèse, le cobalt, le cuivre, le fer ou le ruthénium, Y représente un radical arylène, alcénylène, phénylène ou cycloalkylène, qui peut également, outre le substituant X avoir une substitution alkyle et/ou aryle, avec au total de 1 à 12 atomes de carbone, et à l'intérieur de Y le plus court intervalle entre les atomes de N se complexant avec M s'élève à 1 à 5 atomes de carbone. X représente un hydrogène, -OR³, -NO₂, -F, -Cl, -Br ou-I,
R¹, R² et R³ représentent indépendamment l'un de l'autre un hydrogène ou un radical alkyle comportant de 1 à 4 atomes de carbone, Z¹ et Z² représentent indépendamment l'un de l'autre un hydrogène ou un substituant déplaçant des électrons, en particulier -CO₂Me, -SO₃Me ou -NO₂, Me représente un hydrogène ou un métal alcalin comme le lithium, le sodium ou le potassium et A représente un ligand anionique êquilibrant la charge, comme activateurs pour les composés peroxygénés, en particulier les composés peroxygénés inorganiques, dans les solutions d'oxydation, de lavage, de nettoyage ou de désinfection.

2. Utilisation de complexes de métal(III) de transition de formule (I) pour le blanchiment des salissures de couleur dans le lavage des textiles en présence de composés peroxygénés.

3. Utilisation de complexes de métal(III) de transition de formule (I) dans les solutions de nettoyage pour surfaces dures, en particulier pour la vaisselle, en présence de composés peroxygénés pour le blanchiment des salissures colorées.

4. Utilisation selon l'une des revendications 1 à 3,
**caractérisée en ce que**
le métal de transition M dans le composé selon la formule (I) est le cobalt ou le cuivre.

5. Utilisation selon l'une des revendications 1 à 4,
**caractérisée en ce que**
Y dans le composé selon la formule (I) est un groupe méthylène, un groupe 1,2-éthylène, un groupe 1,3-propylène, un groupe 1,3-propylène substitué par un hydroxy ou un nitro en position 2, un groupe 1,2-cycloalkylène comportant de 4 à 6 atomes de carbone, en particulier un groupe 1,2-cyclohexylène, ou un groupe o-phénylène.

6. Utilisation selon l'une des revendications 1 à 5,
**caractérisée en ce que**
Z¹ et Z² dans la formule (I) sont choisis parmi le groupe hydroxy, le groupe carboxyle, le groupe sulfo, les groupes alcoxy ayant de 1 à 4 atomes de carbone, les groupes aryloxy, le groupe nitro, les halogènes, le groupe amino, qui peut également être mono ou di-alkylé ou -arylé, les groupes alkyles linéaires ou ramifiés comportant de 1 à 4 atomes de carbone, les groupes cycloalkyles comportant de 3 à 6 atomes de carbone, les groupes alcényle linéaires à chaîne droite ou ramifiée comportant de 2 à 5 atomes de carbone, et les groupes aryle qui de leur côté peuvent porter les substituants mentionnés ci-dessus.

7. Utilisation selon l'une des revendications 1 à 6,
**caractérisée en ce que**
Z¹ et Z² dans la formule (I) sont choisis parmi les groupes alcényle qui contiennent une ou deux doubles liaisons C-C où au moins une double liaison est en conjugaison par rapport au noyau benzène.

8. Utilisation selon la revendication 7,
**caractérisée en ce que**
le groupe alcényle est le groupe allyle ou le groupe vinyle.

9. Utilisation selon l'une des revendications 1 à 8,
**caractérisée en ce que**
dans les composés de formule (I) les substituants Z¹ et Z² sont en position 5 et/ou sont identiques.

10. Utilisation selon l'une des revendications 1 à 9,
**caractérisée en ce que**
le ligand d'anion A équilibrant la charge dans les composés de formule (I) est mono- ou polyvalent, où dans ce dernier cas il neutralise également de façon correspondante plusieurs atomes de métaux de transition avec les ligands de N₄, et est en particulier un halogénure, un hydroxyde, un hexafluorophosphonate, perchlorate ou l'anion d'un acide carboxylique.

11. Utilisation selon l'une des revendications 1 à 9,
**caractérisée en ce que**
R¹, R² et R³ sont choisis indépendamment l'un de l'autre parmi les groupes méthyle, éthyle, n-propyle, isopropyle, n-butyle, sec.-butyle, isobutyle et tert.-butyle.

12. Procédé d'activation de composés peroxygénés utilisant un catalyseur de blanchiment selon la formule (I).

13. Procédé selon la revendication 12,
**caractérisé en ce que**
le composé peroxygéné à activer est choisi dans le groupe comprenant les peracides organiques, le peroxyde d'hydrogène, le perborate et le percarbonate ainsi que leurs mélanges.

14. Procédé selon la revendication 12 ou 13,
**caractérisé en ce qu'**
on utilise de 0,00001 mole à 0,025 mole, en particulier de 0,0001 mole à 0,002 mole de composé de métal de transition par mole de composé peroxygéné.

15. Procédé de nettoyage des surfaces dures, en particulier de la vaisselle, utilisant un composé de formule (I) en présence de composés peroxygénés.

16. Agent de lavage, de nettoyage ou de désinfection,
**caractérisé en ce qu'**
il contient un composé peroxygéné et un composé complexe de formule générale (I), outre des constituants habituels compatibles avec le complexe.

17. Agent selon la revendication 16.
**caractérisé en ce qu'**
il contient de 0,0025 % en poids à 0,25 % en poids, en particulier de 0,01 % en poids à 0,1 % en poids du composé de formule (I).

18. Agent selon la revendication 16, pour le nettoyage de la vaisselle, en particulier pour utilisation dans des procédés de lavage à la machine,
**caractérisé en ce qu'**
il contient de 0.001 % en poids à 1 % en poids, en particulier de 0,005 % en poids à 0,1 % en poids, d'un catalyseur de blanchiment selon la formule (I).

19. Agent selon l'une des revendications 16 à 18,
**caractérisé en ce qu'**
on y trouve, outre le complexe selon la formule (I), en particulier à des quantités de 0,5 % en poids à 5 % en poids, d'un composé libérant un acide peroxocarboxylique dans les conditions de la perhydrolyse.
